# EUROPEAN PATENT APPLICATION

(11) **EP 2 661 045 A1**
(43) Date of publication of application: **06.11.2013**
(21) Application number: 12305501.4
(22) Date of filing: 04.05.2012
(51) Int. Cl.: H04L 29/06, H04N 21/24, H04N 21/2343, H04N 21/845

(54) **Method and apparatus for providing a plurality of transcoded content streams**

(71) Applicant: Thomson Licensing, 92130 Issy-les-Moulineaux (FR)
(72) Inventor: Houdaille, Rémi, 35510 Cesson-Sévigné (FR); Gouache, Stéphane, 35000 Rennes (FR); Delaunay, Christophe, 35700 Rennes (FR)
(74) Representative: Rossmanith, Manfred

(57) **Abstract**

A method of providing a plurality of versions of a content stream with different bit-rates is suggested. According to the method each version has been transcoded from the same input content stream. The method comprises the following steps:
a) offering the transcoded versions of the content stream to a client;
b) preparing a manifest part;
c) submitting the manifest part to the client;
d) receiving a request from the client for one specific version of the content stream; and
e) dynamically selecting the bit-rate for transcoded versions to be offered to the client. The suggested method improves the adaptive transcoder so that it uses a small manifest part based on a small set of bit-rate values distributed around the currently delivered bit-rate. In addition to that a system is suggested for implementing the method.

## Description

### Field of the invention

The present invention relates to a method of providing a plurality of versions of a content stream with different bit-rates. According to the inventive method, each version has been transcoded from the same input content stream. The present invention also relates to a system adapted for implementing the method according to the invention.

### Background

Today more and more digital audio and video is stored on a server and can be delivered online. The distribution of content on physical media is continuously decreasing. According to a first approach for online delivery, audio and video content ( A/V content) can be downloaded from a server to a client device as a whole in a single file, e.g. as a digital mp3 audio file. However, in this approach, delivering video content such as an entire film usually requires a long period of time for downloading the video content which delays the start time when the video content can be enjoyed by a user.

According to a second approach for online delivery audio/video content is sliced into sequences of small elements which are downloaded one after the other. An individual element is also called "chunk". The chunks represent small periods of time in the order of a few seconds which can be concatenated to reproduce the full content. The entirety of chunks being sent as a series of chunks is also called audio/video stream. Audio and video content is also referred to as "streaming content". The streaming content is composed of audio and/or video streams.

Audio and/or video streams may be consumed by a user using a variety of different devices. Notably video streams may require a format or representation that is adapted to the screen size of the reproducing device. Audio streams may likewise be subject to limits set by the reproducing device. However, in the following the invention will be presented exemplarily with a focus on video streams without limiting the invention to video streams.

Adaptation of streaming content of any kind may also be required due to variations in the connection over which the content is streamed from the server to the client device. For example, a wireless connection may provide only a varying throughput due to congestion, or varying reception conditions caused by roaming of the receiving device. If the adaptive streaming works properly, the consumer of a content can always enjoy the best possible content because the best rate of the delivered stream is permanently dynamically adapted to changes in the network or playback conditions.

A variety of implementations of adaptive streaming of content have been proposed.

One example is the implementation of Apple Inc., CA, also known as "HTTP Live Streaming", or "HLS". This implementation is described by R. Pantos: "HTTP Live Streaming," IETF, Internet-Draft Version 5 (draft-pantos-http-live-streaming-05), November 2010.

Another implementation is presented by Microsoft ™ and is known as "Silverlight Smooth streaming". This implementation is described in "IIS smooth streaming technical overview." Details are available online under http://www.microsoft.com/downloads/details.aspx?displayla ng=en&FamilyID=03d22583-3ed6-44da-8464-b1b4b5ca7520.

Yet another implementation is presented by Adobe Systems Inc. and is known by the name "Adobe Dynamic Streaming". Details can be found in the document "HTTP dynamic streaming on the Adobe Flash platform", available online under http://www.adobe.com/products/httpdynamicstreaming/pdfs/h ttpdynamicstreaming wp ue.pdf.

Standardization work for adaptive streaming is still being carried out by 3GPP within the SA4 group and in MPEG by the "Dynamic Adaptive Streaming over HTTP" (DASH) group. The DASH group published a first specification release in December 2011. Details on this work are published by T. Stockhammer: "Dynamic adaptive streaming over HTTP -standards and design principles", in Proc. of the 2011 ACM Conference on Multimedia Systems (MMSysE 2011), February 2011, pages 157-168.

The different technologies have in common that the server provides for each period of time several versions of the chunks to allow bit-rate adaptation. The system represented by the server, an encoder, the client, and the network connecting the three, is built in such a way that it is possible for the client to switch from one bit-rate to another by requesting the corresponding chunk version for any period of time. A manifest part describing the chunk arrangements (duration of chunks, bit-rate and/or format of the chunks) is provided separately and - in the case of streaming - needs to be regularly reloaded for updates.

The details of how this is achieved, and the formats of manifest parts vary according to the specific technology used: Apple HTTP Live Streaming, Microsoft Smooth Streaming, Adobe HTTP Dynamic Streaming and others. But all rely on basically the same concepts.

The normal use of such a system is to deliver the data through the Internet from a web server to any client. Such servers - and the http caches on the delivery path - store all the chunk versions that the client may request at a given time.

In a previously filed European patent application EP 1130609.3, the inventors described an HTTP adaptive transcoder allowing to dynamically transcode an AV stream and transmit it to a client implementing such an HTTP adaptive streaming protocol. The adaptive transcoder described in EP1130609.3 has limited computing resources and thus only transcodes to a single or to a very small number of bit-rates, while more possible bit-rates are advertised to the client in the manifest files. The target bit-rate of the encoder is dynamically adapted according to the client requests, so that the benefits of HTTP adaptive delivery are maintained, namely dynamic adaptation to the network and/or terminal limitations. The adaptive transcoder is also called transcoding platform.

With HTTP adaptive streaming, the server has to decide how many versions of the content it will propose and what are their bit-rates. On the one hand, the higher the number of possible bit-rates, the better the client can adapt to current network throughput conditions while keeping the best possible audio and video (A/V) quality. On the other hand, the HTTP server normally has to store a volume of data which depends on the number of versions for the chunks. For example, just providing 3 levels at 1 Mbps, 2 Mbps and 3 Mbps means the stream uses twice the amount of data than the one needed to provide only the highest bit-rate. So the data load on the server can quickly be several times the normal volume of the content when increasing the number of available versions with different bit-rates.

With the above mentioned device described in EP1130609.3 which transcodes on-the-fly and does not produce the 'unrequested' chunks, the volume of the AV stream does not depend on the number of proposed bit-rates. Therefore, it can considerably increase the number of advertised bit-rates to put the client in a position to adapt very precisely to its needs. For example, within a range of bit-rates from 1 Mbps to 3 Mbps with a step size of 50 kbps between different versions of the contents, there are 41 possible bit-rates which will be advertised.

The advertised bit-rates compose a playlist of the client.

However, the manifest part describing the set of available bit-rates has a size that is in proportion of the number of proposed bit-rates. When playing a live stream, the client needs to refresh its play-list quite frequently, which includes reloading the manifest part for available bit-rates. So when the number of available bit-rates becomes high, the amount of descriptive data transmitted in the form of the manifest part is not small any more compared to the content bit-rate. It also increases the parsing work for an application running on the client for processing the streaming content.

The present invention addresses the problem of the size of the manifest part as described above.

### Summary of the Invention

According to a first aspect the present invention suggests to solve the above mentioned problem by a method of providing a plurality of versions of a content stream with different bit-rates. According to the inventive method each version has been transcoded from the same input content stream, wherein the method comprises the following steps:
a) offering the transcoded versions of the content stream to a client;
b) preparing a manifest part;
c) submitting the manifest part to the client;
d) receiving a request from the client for one specific version of the content stream; and
e) dynamically selecting the bit-rate for transcoded versions to be offered to the client.

The idea of the invention is to improve the adaptive transcoder so that it uses a small manifest part based on a small set of bit-rate values distributed around the currently delivered bit-rate.

In an advantageous implementation the method further comprises the step of selecting the bit-rate of the versions to be transcoded such that the difference to a neighbouring bit-rate of another version is dynamically adapted.

It has been found useful if the method further comprises the step of dynamically adapting the difference of the bit-rates between different neighbouring versions in the set of offered bit-rates such that the neighbouring bit-rate depends on the changes of the bit-rates requested by the client.

Likewise, it has been found useful if the method further comprises the step of dynamically adapting the difference of the bit-rates between different neighbouring versions in the set of offered bit-rates such that the difference of the bit-rate depends on how often the client requests a different bit-rate.

In an advantageous embodiment the method further comprises the step of dynamically adapting the difference of the bit-rates between different neighbouring versions in the set of offered bit-rates such that the difference of the bit-rate depends on how big the change of the bit-rates requested by the client is compared to the bit-rate of the currently received version.

In yet another embodiment the inventive method further comprises the step of providing a set of offered bit-rates which comprises bit-rates with an increasing difference to the neighbouring bit-rate which is closer to the currently requested bit-rate.

Advantageously, the method further comprises the step of providing a set of offered bit-rates each having an equal distance to the neighbouring bit-rates.

In an advantageous implementation the method further comprises the step of dynamically adapting the step size of neighbouring bit-rates of different versions if the difference of the bit-rate of a requested version compared with the bit-rate of the currently received version exceeds a threshold value.

According to a second aspect the present invention suggests a system adapted for implementing the method according to the present invention.

### Brief description of the drawing

In the drawing, an embodiment of the present invention is illustrated.

It shows:
Fig. 1 a schematic block diagram of an implementation of the present invention;
Fig. 2a to 2c graphs indicating the bit-rates of the offered versions under different conditions;
Fig. 3 another graph showing bit-rates for a special situation; and
Fig. 4 a flow diagram illustrating the inventive method.

### Detailed description

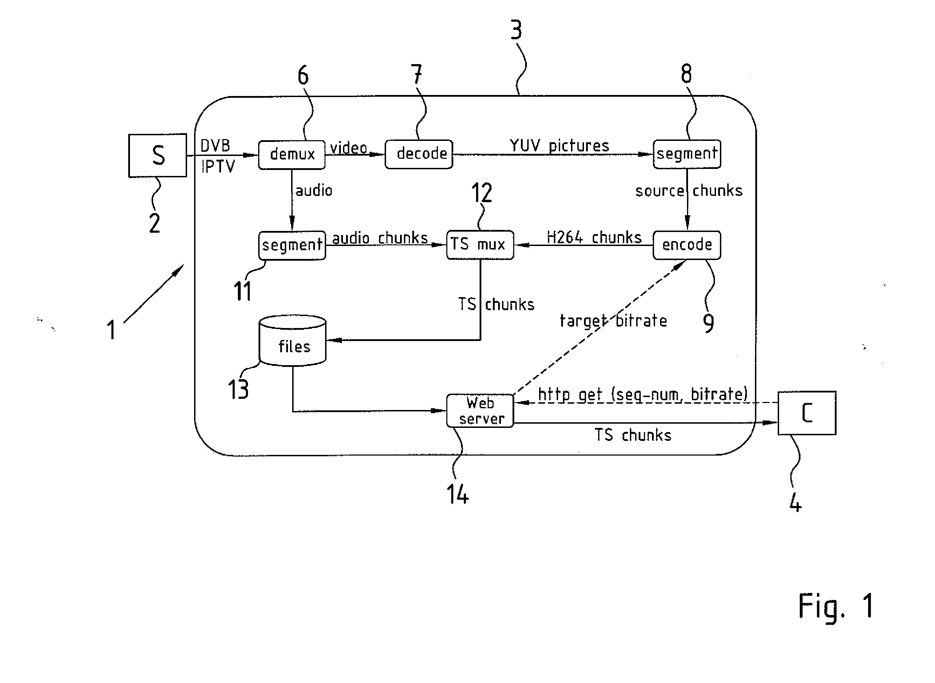

Fig. 1 shows a schematic block diagram of a system 1 implementing the present invention. The system 1 comprises a source 2, an adaptation platform 3 and a reproduction device 4.

The source 2 is the origin of the streaming content, e.g. video content. In other words, the source 2 is the provider of the streaming content. It may e.g. be a home device delivering any kind of home or prepaid video, or an external content provider delivering broadcast or multicast video (DVB-T, DVB-IPTV, etc.), or even a video on demand service (VoD-service), which can be represented as a file or streamed from the network. In Fig. 1, the source 2 is shown to provide A/V content in the form of DVB and IPTV signals, as an example.

The reproduction device 4 is a commercial terminal, or client device, which is capable of playing audio and/or video in different qualities depending on its capabilities and network conditions. In the present patent application a client device is any device allowing a user to connect to the server, download the content and reproduce the content in an audible and visible manner for the user. In the present patent application the terms "client device" and "client" have an equivalent meaning. In the present context of HTTP adaptive streaming, the reproduction device 4 is also referred to as client 4. A protocol like HTTP adaptive streaming is preferred since it allows for the client 4 requesting the appropriate quality just before playing it.

The adaptation platform 3 is provided with a demultiplexer 6 ("demux") for demultiplexing the incoming content stream into separate audio and video components, if applicable. The video component is decoded in a decoder 7 "decode" and segmented in video segmenting unit 8 "segment". Then, the segments ("source chunks") are transcoded, i.e. re-encoded using parameters different from the original parameters, in encoder 9 "encode". The encoder 9 may be a H.264 encoder, but other formats are likewise possible. The audio component is split into segments ("audio chunks") in segmenting unit 11 "segment" and may be transcoded, too (not shown). Then, the audio and transcoded video segments are provided to multiplexer 12 "TS mux". The multiplexer 12 prepares a manisfest part according to the M3U8 manifest format. Multiplexer 12 "TS mux" stores the transcoded and multiplexed segments and the manifest part in a mass storage 13 "files", from where a server 14 "Web server", e.g. a HTTP server, transfers the segments to the client 4.

As discussed further above the invention is particularly useful when implemented in an adaptation platform 3 or transcoder having limited processing power, e.g. in an internet gateway with basic media processing capabilities based on the Intel CE4200 processor.

Those skilled in the art will recognize that the choices of H.264 codec and M3U8 manifest format used in the embodiment discussed above are only necessary for the description of the invention when applied to Apple client devices. Other adaptive streaming implementations requiring other codecs such as VC1, WebM and other manifest formats can likewise benefit from the described invention when encoding resources are too scarce to produce all the necessary alternative versions of a stream in parallel.

In case of streaming live video the manifest announces sets of chunks which change over time. The announced set of variants also varies. This is used in the present invention, by dynamically modifying the set of proposed variants. The versions presented in the manifest are updated depending on the past variations of the connection's throughput.

Since the adaptation platform 3 has a loose connection between the actual bit-rate the chunks are produced and the bit-rate requested by the client 4, it is possible to rather freely produce the manifest. According to the present invention, the adaptation platform 3 selects the following bit-rates to be proposed to the client:

The adaptation platform proposes the current target bit-rate for the client, that is, the last bit-rate requested by the client. This is important because when network conditions are stable, the client will converge to an optimal value and keep requesting the same. Therefore, it needs to be proposed.

The adaptation platform 3 also proposes some bit-rates quite close to the current target bit-rate. For an optimal convergence of the client (best possible quality while staying just below the maximum available bandwidth) alternative bit-rates are proposed that are a small step size separated from the currently received bit-rate. This allows the client 4 to make a precise adaptation with a smooth quality change. This is important for the visual perception of the end user.

In addition to that, the adaptation platform 3 proposes some other bit-rates far away from the current target. This allows the client 4 to make fast adaptations in case of serious changes in the network conditions.

In a specific example, it is assumed that a version of content stream is delivered with a bit-rate of 2 Mbps. Then the manifest proposes the following bit-rates: 1 Mbps; 1.5 Mbps; 1.8 Mbps; 1.9 Mbps; 1.95 Mbps; 2 Mbps; 2.05 Mbps; 2.1 Mbps; 2.2 Mbps; 2.5 Mbps; 3 Mbps.

Indeed the number of steps and the spacing between the steps can be adapted to various parameters of the system 1.

It is even possible to change dynamically the way the steps are arranged, depending on the behaviour of the client 4. When the requested bit-rate is quite stable, the invention proposes more bit-rates close to the one of the currently delivered version, with very small steps, and fewer bit-rates far from the current one. When the conditions become unstable, the invention proposes to space the bit-rates with regular steps between bit-rates so that the client can reposition itself in any area within the available bit-rate range.

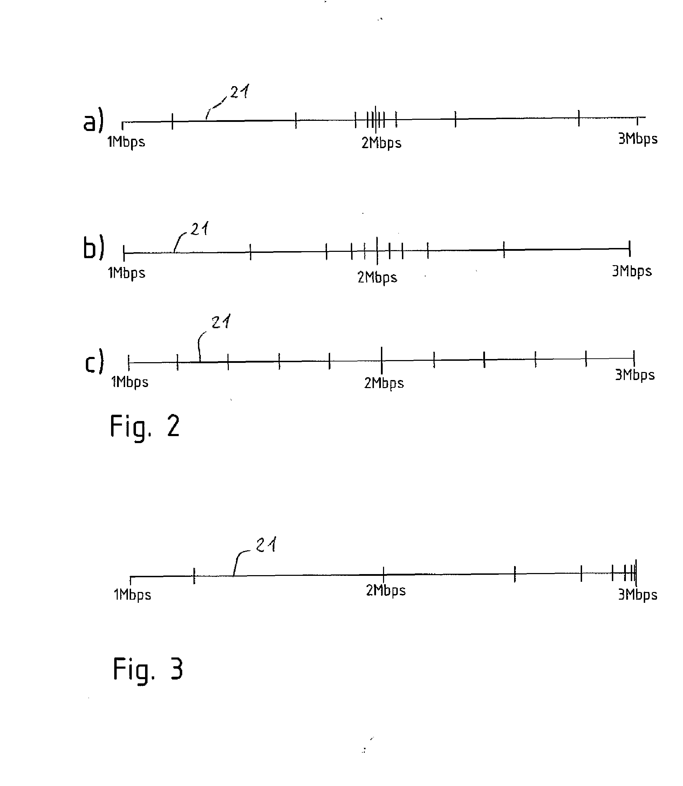

The described situations are illustrated in Figs. 2a to 2c showing a scale 21 of bit-rates in the range of 1 Mbps to 3 Mbps. The vertical bars show the bit-rates proposed to the client 4. The long vertical bar in the middle of scale 21 represents the 'current' bit-rate. Figs. 2a to 2c illustrate an exemplary embodiment of the present invention proposing versions with 10 alternate bit-rates to the client 4.

Fig. 2a shows the bit-rates for a stable situation, with small steps around the currently delivered bit-rate. As illustrated in Fig. 2a the lowest and highest possible bit-rates at 1 Mbps and 3 Mbps are not proposed to the client 4. The proposed bit-rates rather span a more limited range because under the assumption of a stable bandwidth it is unlikely that the client needs to change to an extreme value such as 1 Mbps or 3 Mbps in the present embodiment.

Fig. 2c shows an equally spaced set of bit-rates spanning the full available range. This kind of selection of the bit-rates is used when the situation is not stable and the client 4 shall be able to go to 'any' bit-rate within the available range.

Fig. 2b shows an intermediate situation in which, compared to Fig. 2a, the proposed bit-rates are less focused around the currently delivered bit-rate but are still not equidistant like in Fig. 2c.

Indeed the number of proposed bit-rates can be different without impacting the idea of the invention, and may be varying in time. The set of proposed bit-rates also does not need to be symmetrically distributed as shown in Figs. 2a to 2c. For example, when the current requested bit-rate is very low or very high compared to the possible range for the given content, there may be a smaller number of values with small distance below or above the current bit-rate, respectively, and a greater number with more spacing above or below, respectively.

Fig. 3 shows a situation when the currently delivered bit-rate is at the upper limit of the available bit-rate range. Consequently, all other offered bit-rates are below the currently delivered bit-rate.

In a specific embodiment of the present invention the following process is used:

The number of advertized bit-rates is set to 11.

For a given content, minimum and maximum bit-rate values are determined. The maximum is the bit-rate of the video at its best possible quality, i.e. ideally without transcoding. In case the bit-rates of the source 2 and the output codec 9 must be different, then a transcoding is mandatory and the maximum bit-rate may be different from the source bit-rate. The minimum bit-rate is determined as the lowest acceptable bit-rate for the end user. This is quite subjective and depends on the device type - for an HD TV set better quality is expected than for a mobile phone - and on user preferences. The ratio between maximum bit-rate (max) and minimum bit-rate (min) is 10 for example.

Then at any point in time, the current bit-rate B is considered as being the last requested one. For start-up, some initial value is selected by the transcoder, as it is also explained in the European patent application EP 1130609.3. This bit-rate is always included in the list of advertised bit-rates. For the 10 remaining bit-rate values, at first the number of them to be below or above B is decided. These two numbers are made proportional to (B - min) and (max - B), respectively, but rounding the lowest number to the ceiling value. This means the small side has always at least one value, except when B is exactly equal to the minimum or maximum bit-rate. For example, if B corresponds to a 75% value of a bit-rate interval limited at the low end by the minimum bit-rate and at the high end by the maximum bit-rate (in short, this interval is noted as [min, max]), then 7 advertised values are put below B and 3 above B. If B corresponds to a 90% value of the interval [min, max]) there are 9 advertised values below B and 1 advertised value above B. It is specifically noted that if B corresponds to a 99% value of the interval [min, max]), there are still 9 advertised values below B and one advertised value above B.

Then in order to place the values into each interval, the 'stability' of the client 4 is measured. For this purpose, the web server 14 delivering the content chunks collects the requested bit-rate values from the client 4. From this, the standard deviation σ on the set of the last 20 bit-rate values requested by the client is computed. Let N be the number of bit-rates to be generated above B as already explained. If σ is greater than (max - B)/N then the instability of requests requires that equally spaced bit-rates are provided. Otherwise, the ratio p= (max - B)/(N × σ) is used to generate the values n^ρ (other writing: n^{ρ}) for n in [1, N] (interval of natural numbers from 1 to N) is used. Those N values are finally reduced to the correct range by multiplying with (max - B)/N^ρ and adding the base value B.

The same algorithm is easily applied to the values below B, by using B - min instead of max - B in the formulae.

It is noted that other formulas also produce the desired effect. The invention is not limited to a specific way how the stability of the network is calculated.

The main advantage of the invention is that it allows the adaptive delivery of A/V content to converge to any optimal value with great precision while not requiring to advertise a very lengthy list of alternative versions covering all possible bit-rates.

Providing small bit-rate steps also helps because it lowers the difference between requested bit-rate and the provided chunk introduced by pre-transcoding of chunks in a limited number of bit-rate(s ). E.g. if the client has requested chunk N with bit-rate B, the adaptive transcoder prepares chunk N+1 with the same bit-rate B and also the following chunk N+2 with bit-rate B. in other words there is a delay between when the request for another bit-rate is sent to the adaptive transcoder and when the first chunk is produced with the requested bit-rate. For example, if the client needs to change from bit-rate B to a lower bit-rate B' and consequently requests chunk N+1 with bit-rate B', it will actually still receive chunk N+1 and chunk N+2 with bit-rate B and not with bit-rate B'. The transcoder encodes only chunk N+3 with bit-rate B'.

When the difference between B and B' is large, this delay of sending too much data may starve the client buffer and lead to a video freeze in client 4. The reason is since the chunk to be received is too large compared to the available bandwidth, it will take a long period of time to arrive. During this period of time, the client 4 will have used all the previously buffered data and will have to stop playing, waiting for the remaining data to arrive.

Providing smaller steps should give the client opportunity to change more often but with small differences of bit-rates, which reduces the risk of video freeze in the client 4.

The calculations needed to build the list of bit-rates are not costly in terms of computing power. This small cost is balanced by the savings in the volume transmitted to the client 4 in the manifest part, but also by limiting the cost of producing « pseudo chunks » such as through symbolic links in the mass storage 13. This can be explained as follows: In the adaptive transcoder, when producing a chunk at bit-rate B, one file for every bit-rate is created and signalled in the manifest. The web server just has to serve for requested files. The file names of the files are built with chunk number and bit-rate value. Rather than duplicating the file using a lot of storage space symbolic links are created all pointing to the same file. However, even creating links has a cost because it is a file system call. If it occurs many times for each chunk the required computing power can be considerable.

It is noted that the set of bit-rates of the versions offered by the adaptation platform 3 is only adapted if the stability of the client 4 changes beyond a predetermined threshold value. In one embodiment the threshold value is defined as a specific number of requests for a bit-rate different than the currently delivered bit-rate during a predetermined period of time. In another embodiment the threshold value is defined as the difference of the requested bit-rate compared with the currently delivered bit-rate. In implementations of the present invention there may be more than one threshold value. Exceeding one or several threshold values initiates the adaptation of the bit-rates of the set of offered versions.

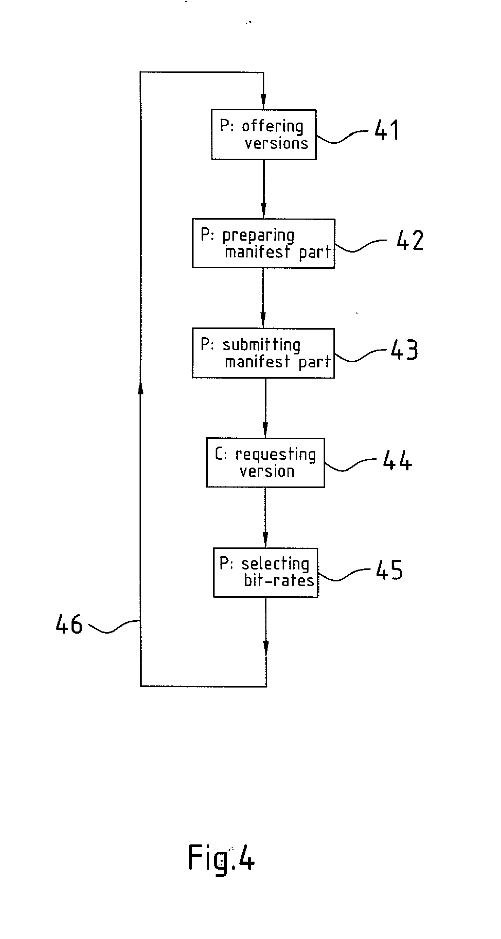

Fig. 4 illustrates the principles of the method according to the present invention in a flow diagram. In step 41 the adaptation platform 3 offers versions of A/V content with different bit-rates to the client 4. In step 42 the adaptation platform 3 also prepares a manifest part of the offered versions. In step 43 the adaptation platform 3 submits the manifest part to the client 4. The client requests in step 44 a specific version of the content. In response to the request of the client 4, the adaptation platform 3 selects the bit-rates of the offered versions. As described above the selected bit-rate may or may not change as a function of the request of the client 4. As it is symbolized by loop 46, the method returns to step 41 in which the adaptation platform 3 offers a set of versions of the content to the client 4.

The system according to the present invention improves the user experience obtained with the adaptive transcoder by allowing convergence to close to optimal bit-rate, i.e. stable behaviour of the client when facing stable network conditions. There are no oscillations between two values above and below the desired one.

### List of Reference Numbers

1. system
2. source
3. adaptation platform
4. reproduction device
6. demultiplexer
7. decoder
8. video segmenting unit
9. encoder
11. audio segmenting unit
12. multiplexer
13. mass storage
14. server
21. scale of bit-rates
41. step of offering version
42. step of preparing a manifest part
43. step of submitting manifest part
44. step of requesting a specific version
45. step of selecting the bit-rates
46 loop

## Claims

1. Method of providing a plurality of versions of a content stream with different bit-rates, wherein each version has been transcoded from the same input content stream, wherein the method comprises the following steps:
a) offering the transcoded versions of the content stream to a client (4);
b) preparing a manifest part;
c) submitting the manifest part to the client (4);
d) receiving a request from the client (4) for one specific version of the content stream; and
e) dynamically selecting the bit-rate for transcoded versions to be offered to the client (4).

2. Method according to claim 1, wherein the method further comprises the step of selecting the bit-rate of the versions to be transcoded such that the difference to a neighbouring bit-rate of another version is dynamically adapted.

3. Method according to claim 2, wherein the method further comprises the step of dynamically adapting the difference of the bit-rates between different neighbouring versions in the set of offered bit-rates such that the neighbouring bit-rate depends on the changes of the bit-rates requested by the client (4).

4. Method according to claim 3, wherein the method further comprises the step of dynamically adapting the difference of the bit-rates between different neighbouring versions in the set of offered bit-rates such that the difference of the bit-rate depends on how often the client requests a different bit-rate.

5. Method according to claim 3, wherein the method further comprises the step of dynamically adapting the difference of the bit-rates between different neighbouring versions in the set of offered bit-rates such that the difference of the bit-rate depends on how big the change of the bit-rates requested by the client is compared to the bit-rate of the currently received version.

6. Method according to claim 3, wherein the method further comprises the step of providing a set of offered bit-rates which comprises bit-rates with an increasing difference to the neighbouring bit-rate which is closer to the currently requested bit-rate.

7. Method according to claim 3, wherein the method further comprises the step of providing a set of offered bit-rates each having an equal distance to the neighbouring bit-rates.

8. Method according to one or several of claims 3 to 5, wherein the method further comprises the step of dynamically adapting the step width of neighbouring bit-rates of different versions if the difference of the bit-rate of a requested version compared with the bit-rate of the currently received version exceeds a threshold value.

9. System (1) adapted for implementing the method according to one or several of the previous claims.
